# EUROPEAN PATENT APPLICATION

(11) **EP 4 800 905 A1**
(43) Date of publication of application: **02.09.2026**
(21) Application number: 26160641.2
(22) Date of filing: 25.02.2026
(51) Int. Cl.: H02M 3/158, H02M 7/219, C25B 1/04, H02M 1/00, H02M 1/36

(54) **POWER CONVERSION SYSTEM**

(30) Priority: 27.02.2025 JP 2025030633
(71) Applicant: DENSO CORPORATION, Kariya-city, Aichi-pref. 448-8661 (JP)
(72) Inventor: SUZUKI, Daisuke, Nisshin-city, Aichi-pref., 470-0111 (JP); OHIRA, Koji, Kariya-city, Aichi-pref., 448-8661 (JP); KABEYA, Satoki, Kariya-city, Aichi-pref., 448-8661 (JP)
(74) Representative: TBK

(57) **Abstract**

A power conversion system (1) configured to supply direct current power to an electrolysis device (2) includes: a power conversion device (3) that converts source power into direct current power; a positive-side wiring (5) and a negative-side wiring (50) that connect the power conversion device (3) and the electrolysis device (2) to each other; a filter capacitor (12) connected between the positive-side wiring (5) and the negative-side wiring (50); a relay (52) provided on at least one of the positive-side wiring (5) and the negative-side wiring (50) on the electrolysis device (2) side of the filter capacitor (12); a first voltage detection device (131); a second voltage detection device (132); and a control device (4). The control device (4) is configured to control the power conversion device (3) so that a first voltage (V1) detected by the first voltage detection device (131) is greater than or equal to a second voltage (V2) detected by the second voltage detection device (132), when connecting the relay (52).

## Description

### [Cross-Reference to Related Applications]

This application is based on and claims the benefit of priority from earlier Japanese Patent Application No. 2025-030633 filed February 27, 2025, the description of which is incorporated herein by reference.

### [Technical Field]

The present disclosure relates to a power conversion system.

### [Background Art]

A power conversion device for a vehicle that includes a converter and an inverter is disclosed in, for example, PTL 1. This power conversion device boosts voltage of direct current power from a high-voltage battery using the converter, then converts the direct current power into alternating current power using the inverter, and supplies three-phase alternating current power to a rotating electric machine. A low-voltage battery is connected to the converter, in parallel with the high-voltage battery. A capacitor connected between a power source line and a ground line is charged by the low-voltage battery, and then power is supplied from the high-voltage battery to the power conversion device. This suppresses an inrush current from the high-voltage battery to the power conversion device.

### [Citation List]

### [Patent Literature]

[PTL 1] JP 2007-259584 A

### [Summary of the Invention]

### [Technical Problem]

However, when attempting to utilize a power conversion device to supply power to an electrolysis device for hydrogen production, the following problems are concerned.

In a system that converts three-phase alternating current power into direct current power and supplies the power to an electrolysis device, a power conversion device is provided between a three-phase alternating current power source and the electrolysis device. In this case, a filter capacitor is provided between positive-side and negative-side wirings connected to the electrolysis device in order to suppress current ripple in the direct current power to be supplied to the electrolysis device. In order to prevent an inrush current from the electrolysis device when the power conversion device is connected to the electrolysis device, it is necessary to charge the filter capacitor before starting to supply power to the electrolysis device. However, this charging cannot be performed from the electrolysis device. This is because current flow from the electrolysis device to the filter capacitor side may accelerate deterioration of electrodes of the electrolysis device.

The present disclosure has been made in view of such problems, and aims to provide a power conversion system that can prevent a reverse flow of a current from an electrolysis device to a filter capacitor.

### [Solution to Problem]

An aspect of the present disclosure relates to a power conversion system (1) configured to supply direct current power to an electrolysis device (2) that electrolyzes a raw material to produce hydrogen, the power conversion system including:
a power conversion device (3) that converts source power into direct current power;
a positive-side wiring (5) and a negative-side wiring (50) that connect the power conversion device and the electrolysis device to each other;
a filter capacitor (12) connected between the positive-side wiring and the negative-side wiring;
a relay (52) provided on at least one of the positive-side wiring and the negative-side wiring on the electrolysis device side of the filter capacitor;
a first voltage detection device (131) connected between the positive-side wiring and the negative-side wiring on the power conversion device side of the relay;
a second voltage detection device (132) connected between the positive-side wiring and the negative-side wiring on the electrolysis device side of the relay; and
a control device (4) that controls the power conversion device,
in which the control device is configured to control the power conversion device so that a first voltage (V1) detected by the first voltage detection device is greater than or equal to a second voltage (V2) detected by the second voltage detection device, when connecting the relay.

In the above power conversion system, the control device controls the power conversion device so that the first voltage is greater than or equal to the second voltage, when connecting the relay. This can prevent a reverse flow of a current from the electrolysis device to the filter capacitor, when the relay is connected.

As described above, according to the above aspect, it is possible to provide a power conversion system that can prevent a reverse flow of a current from the electrolysis device to the filter capacitor.

Another aspect of the present disclosure relates to a method of supplying direct current power to an electrolysis device that electrolyzes a raw material to produce hydrogen, the method comprising:
detecting a first voltage between a positive-side wiring and a negative-side wiring on a power conversion device side of a relay that is provided on at least one of the positive-side wiring and the negative-side wiring;
detecting a second voltage between the positive-side wiring and the negative-side wiring on the electrolysis device side of the relay;
controlling the power conversion device such that the first voltage detected on the power conversion device side is greater than or equal to the second voltage detected on the electrolysis device side; and
connecting the relay after the first voltage becomes equal to or higher than the second voltage.

Note that reference signs in parentheses described in the claims indicate correspondence relations with specific means described in the following embodiments, and do not limit the technical scope of the present invention.

### [Brief Description of the Drawings]

Fig. 1 is an explanatory diagram of a power conversion system according to a first embodiment.
Fig. 2 is a control flow diagram of the power conversion system according to the first embodiment.
Fig. 3 is an explanatory diagram of a power conversion system according to a second embodiment.
Fig. 4 is an explanatory diagram of a power conversion system according to a third embodiment.
Fig. 5 is a diagram illustrating PWM control in the third embodiment.
Fig. 6 is an explanatory diagram of a power conversion system according to a fourth embodiment.
Fig. 7 is an explanatory diagram of a power conversion system according to a fifth embodiment.

### <Description of the Embodiments>

### (First Embodiment)

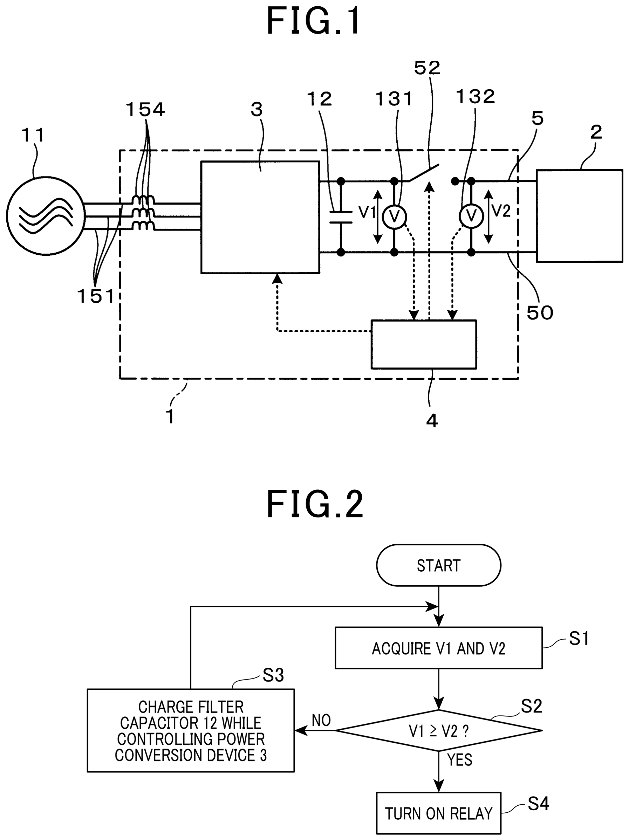

An embodiment of a power conversion system will be described with reference to Figs. 1 and 2.

A power conversion system 1 of the present embodiment is a power conversion system that supplies direct current power to an electrolysis device 2. The electrolysis device 2 is an electrolysis device that electrolyzes a raw material to produce hydrogen.

As shown in Fig. 1, the power conversion system 1 includes a power conversion device 3, a positive-side wiring 5 and a negative-side wiring 50, a filter capacitor 12, a relay 52, a first voltage detection device 131, a second voltage detection device 132, and a control device 4.

The power conversion device 3 converts source power into direct current power. The positive-side wiring 5 and the negative-side wiring 50 connect the power conversion device 3 and the electrolysis device 2 to each other. The filter capacitor 12 is connected between the positive-side wiring 5 and the negative-side wiring 50. The relay 52 is provided on at least one of the positive-side wiring 5 and the negative-side wiring 50 on the electrolysis device 2 side relative to the filter capacitor 12.

The first voltage detection device 131 is connected between the positive-side wiring 5 and the negative-side wiring 50 on the power conversion device 3 side relative to the relay 52. The second voltage detection device 132 is connected between the positive-side wiring 5 and the negative-side wiring 50 on the electrolysis device 2 side relative to the relay 52. The control device 4 controls the power conversion device 3.

The control device 4 is configured to control the power conversion device 3 so that a first voltage V1 detected by the first voltage detection device 131 is greater than or equal to a second voltage V2 detected by the second voltage detection device 132, when connecting the relay 52.

The power conversion device 3 of the power conversion system 1 is connected to a three-phase alternating current power source 11 by a supply wiring 151. The supply wiring 151 is provided with an inductor 154. This suppresses ingress of noise, such as switching noise in the power conversion device 3, into the three-phase alternating current power source 11. The three-phase alternating current power source 11 can be, for example, a power system.

The power conversion system 1 of the present embodiment is connected to the electrolysis device 2 via the positive-side wiring 5 and the negative-side wiring 50. The positive-side wiring 5 is connected to a positive electrode of the electrolysis device 2, and the negative-side wiring 50 is connected to a negative electrode of the electrolysis device 2. The electrolysis device 2 electrolyzes a raw material to produce hydrogen. The raw material is, for example, water vapor. That is, the electrolysis device 2 can produce hydrogen by electrolyzing water vapor, which is a raw material gas, using the power supplied by the power conversion system 1. The electrolysis device 2 can, for example, include an SOEC (i.e., solid oxide electrolysis cell) or a PEM (i.e., proton exchange membrane).

Specific examples of the power conversion device 3 will be described in third and fourth embodiments which will be described later. As the power conversion device 3, a power conversion device for a vehicle can also be applied to the power conversion system 1 for supplying power to the electrolysis device 2 for hydrogen production.

The filter capacitor 12 suppresses current ripple in the direct current power to be supplied to the electrolysis device. The filter capacitor 12 suppresses an inrush current to the power conversion device 3. The filter capacitor 12 can have a capacitance of, for example, approximately 10 to 100000 µF.

The relay 52 can be configured, for example, by an electromagnetic relay. The first voltage detection device 131 and the second voltage detection device 132 can be configured, for example, by a voltage sensor.

The control device 4 includes a microcomputer equipped with a processor, a memory, and the like, and its peripheral circuit. The control device 4 may be composed of a plurality of microcomputers and their peripheral devices.

The control device 4 is not limited to a microcomputer, and may be implementedby hardware circuits such as logic circuits or comparison circuits.

The control device 4 controls driving of the power conversion device 3. The control device 4 is electrically connected to the first voltage detection device 131 and the second voltage detection device 132, and receives detection signals from the first voltage detection device 131 and the second voltage detection device 132. As will be described later, the control device 4 controls the power conversion device 3 based on these detection signals. The control device 4 can also control opening and closing of the relay 52.

The control device 4 controls the power conversion device 3 to convert three-phase alternating current power supplied from the three-phase alternating current power source 11 into direct current power and to charge the filter capacitor 12. At this time, the control device 4 controls the power conversion device 3 so that the first voltage V1 detected by the first voltage detection device 131 is greater than or equal to the second voltage V2 detected by the second voltage detection device 132. Only when the first voltage V1 is greater than or equal to the second voltage V2, the relay 52 is closed (i.e., energized).

The flow of the above control performed by the control device 4 will be briefly explained with reference to Fig. 2. The flow starts with the relay 52 open. First, the first voltage V1 and the second voltage V2 are acquired (step S1). The first voltage V1 and the second voltage V2 are compared, and if V1 ≥ V2 is not satisfied, the filter capacitor 12 is charged while the power conversion device 3 is controlled based on the first voltage V1 and the second voltage V2 (step S3). Then, when it is determined in step S2 that V1 ≥ V2 is satisfied, the relay 52 is closed (step S4).

The above flow represents an example of a method of supplying direct current power to the electrolysis device 2.

Next, working effects of the present embodiment will be described.

In the above power conversion system 1, when connecting (i.e., energizing) the relay 52, the control device 4 controls the power conversion device 3 so that the first voltage V1 is greater than or equal to the second voltage V2. This can prevent a reverse flow of a current from the electrolysis device 2 to the filter capacitor 12, when the relay 52 is connected.

If the relay 52 is connected in a state where the filter capacitor 12 is not charged, there is a risk that an inrush current will flow from the electrolysis device 2 to the power conversion device 3 side. In this case, there is a concern that malfunctions may occur in electronic components that make up the power conversion device 3.

Therefore, when the relay 52 is connected, it is necessary to charge the filter capacitor 12 in advance. Here, the filter capacitor 12 cannot be charged from the electrolysis device 2. Therefore, as described above, the filter capacitor 12 is charged from the three-phase alternating current power source 11 via the power conversion device 3. However, even if the filter capacitor 12 is charged in advance, the connection of the relay 52 in a state where the first voltage V1 is lower than the second voltage V2 results in a reverse flow of a current from the electrolysis device 2 to the filter capacitor 12. This may cause deterioration in electrodes of the electrolysis device 2.

Therefore, as described above, the control device 4 controls the power conversion device 3 so that the first voltage V1 is greater than or equal to the second voltage V2, when connecting the relay 52. Then, the relay 52 is connected in a state where V1 ≥ V2 is satisfied. This makes it possible to realize charging of the filter capacitor 12 while preventing a reverse flow of a current from the electrolysis device to the filter capacitor.

As described above, according to the present embodiment, it is possible to provide a power conversion system that can prevent a reverse flow of a current from the electrolysis device to the filter capacitor.

### (Second Embodiment)

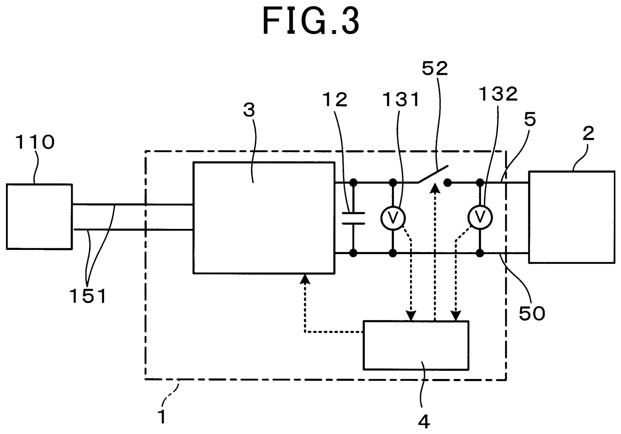

As shown in Fig. 3, the present embodiment is an embodiment of a power conversion system 1 that converts direct current power from a direct current power source 110 into direct current power of a different voltage and supplies the power to an electrolysis device 2.

That is, in the configuration illustrated in the first embodiment, the power conversion device 3 of the power conversion system 1 is connected to the three-phase alternating current power source 11, but, in the present embodiment, a power conversion device 3 of the power conversion system 1 is connected to the direct current power source 110. The voltage of the direct current power supplied from the direct current power source 110 is boosted or reduced by the power conversion device 3, and the direct current power is supplied to the electrolysis device 2.

The direct current power source 110 used can be, for example, a rechargeable battery, a fuel cell, a solar cell, or the like. The present embodiment is similar to the first embodiment in that, before a relay 52 is connected, a filter capacitor 12 is charged via the power conversion device 3 so that a first voltage V1 is greater than or equal to a second voltage V2.

Other configurations and working effects of the present embodiment are identical to those of the first embodiment. Out of the reference signs used in the second embodiment and the subsequent embodiments, the same ones as those used in the first embodiment, unless otherwise specified, represent the same constituent elements as those in the first embodiment.

### (Third Embodiment)

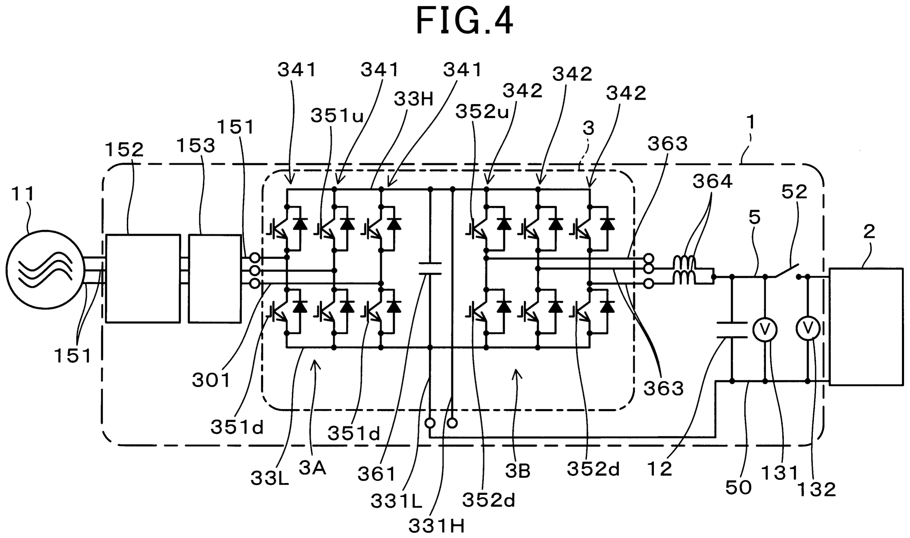

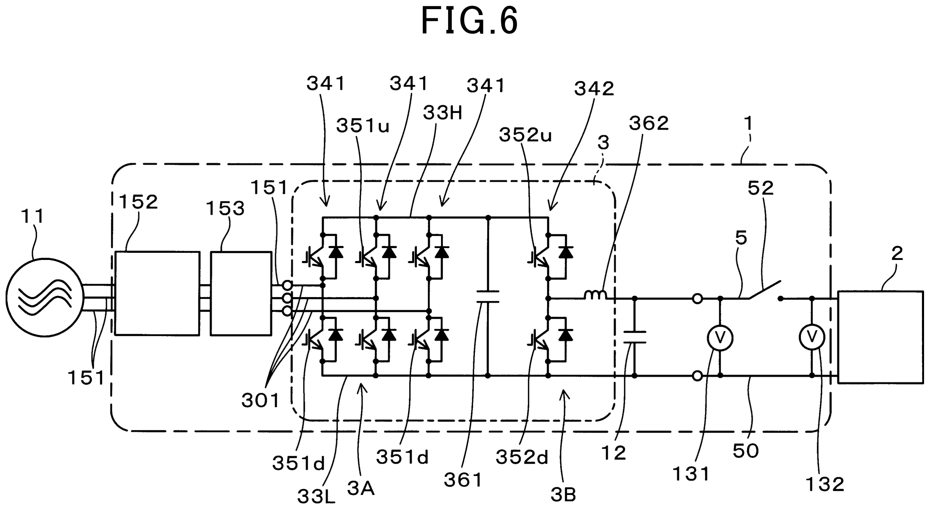

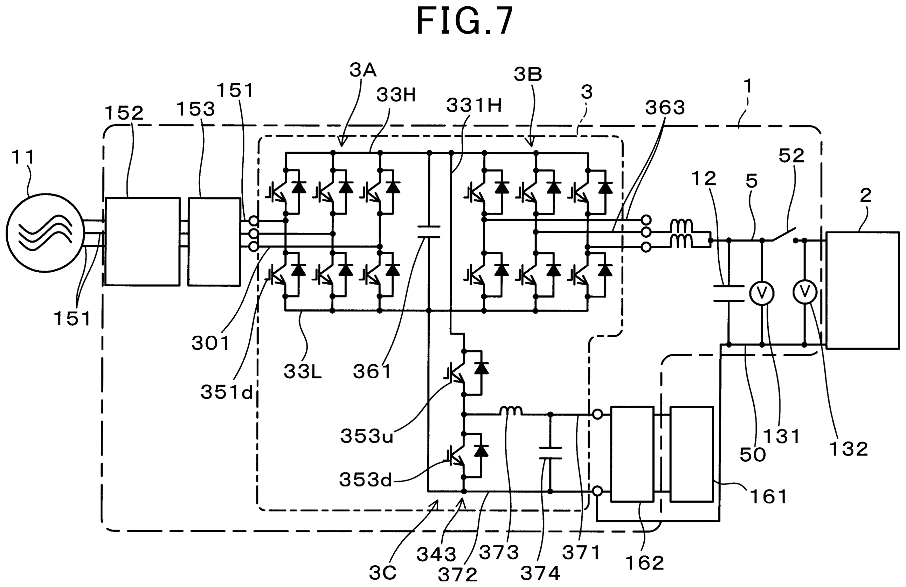

As shown in Fig. 4, the present embodiment is an embodiment in which a power conversion device 3 includes a first power conversion device 3A and a second power conversion device 3B. In Fig. 4, a control device 4 (see Fig. 1) is omitted. The same applies to Figs. 6 and 7 which will be described later.

A first power conversion device 3A converts source power into direct current power. A second power conversion device 3B converts the direct current power converted by the first power conversion device 3A into direct current power of a different voltage.

The first power conversion device 3A and the second power conversion device 3B are connected by a high potential-side wiring 33H and a low potential-side wiring 33L. A DC link capacitor 361 is connected between the high potential-side wiring 33H and the low potential-side wiring 33L between the first power conversion device 3A and the second power conversion device 3B. The control device 4 is configured to charge the DC link capacitor 361 from source power by the first power conversion device 3A, and to charge the filter capacitor 12 from the DC link capacitor 361 by the second power conversion device 3B.

The first power conversion device 3A includes a plurality of first legs 341 connected in parallel with each other between the high potential-side wiring 33H and the low potential-side wiring 33L. Each first leg 341 includes a first upper arm switch 351u connected to the high potential-side wiring 33H and a first lower arm switch 351d connected to the low potential-side wiring 33L, the first upper arm switch 351u and the first lower arm switch 351d being connected in series.

Connection points between the first upper arm switches 351u and the first lower arm switches 351d in the plurality of first legs 341 are connected to an input wiring 301 to which source power is input. In the present embodiment, three first legs 341 are connected in parallel.

The second power conversion device 3B includes a plurality of second legs 342 connected in parallel with each other between the high potential-side wiring 33H and the low potential-side wiring 33L. Each second leg 342 includes a second upper arm switch 352u connected to the high potential-side wiring 33H and a second lower arm switch 352d connected to the low potential-side wiring 33L, the second upper arm switch 352u and the second lower arm switch 352d being connected in series. In the present embodiment, three second legs 342 are connected in parallel.

One or two of the connection points between the second upper arm switches 352u and the second lower arm switches 352d in the plurality of second legs 342 are connected to a positive-side wiring 5. The low potential-side wiring 33L is connected to a negative-side wiring 50.

An output wiring 363 is connected to each of the connection points between the second upper arm switches 352u and the second lower arm switches 352d in the three second legs 342. In the present embodiment, two of these three output wirings 363 are connected via reactors 364 to the positive-side wiring 5 that is connected to a positive electrode of the electrolysis device 2. The remaining one of the three output wirings 363 is an unused wiring. It is also possible to connect one of the three output wirings 363 to the positive-side wiring 5 and to leave the remaining two as unused wirings.

The low potential-side wiring 33L is connected to the negative-side wiring 50 connected to a negative electrode of the electrolysis device 2 via an extraction wiring 331L. The filter capacitor 12 is connected between the positive-side wiring 5 and the negative-side wiring 50. An extraction wiring 331H is connected also to the high potential-side wiring 33H, but the extraction wiring 331H is an unused wiring.

The input wiring 301 of the first power conversion device 3A is connected to a supply wiring 151 for three-phase alternating current power from a three-phase alternating current power source 11. The supply wiring 151 is provided with a precharge circuit 152 and a filter circuit 153. The precharge circuit 152 includes, for example, a switch and a resistor, and prevents an inrush current from flowing from the three-phase alternating current power source 11 to the power conversion device 3. The filter circuit 153 includes, for example, an inductor and a capacitor, and removes a noise component or the like from the three-phase alternating current power supplied by the three-phase alternating current power source 11. The three-phase alternating current power source 11 can be, for example, a power system.

A freewheeling diode is connected, in anti-parallel, to each of the first upper arm switch 351u, the first lower arm switch 351d, the second upper arm switch 352u, and the second lower arm switch 352d. Each of the first upper arm switch 351u, the first lower arm switch 351d, the second upper arm switch 352u, and the second lower arm switch 352d can be composed, for example, of an IGBT (i.e., an insulated gate bipolar transistor), a MOSFET (metal oxide semiconductor (MOS) field effect transistor), or the like.

In the first power conversion device 3A in the power conversion device 3, the input three-phase alternating current power is converted into direct current power by appropriate switching operations between the plurality of first upper arm switches 351u and the plurality of first lower arm switches 351d. This direct current power is charged into the DC link capacitor 361. In the second power conversion device 3B, this direct current power is converted into direct current power of an appropriate voltage by an appropriate switching operation between the second upper arm switch 352u and the second lower arm switch 352d, and is then output. This output direct current power is supplied to the electrolysis device 2. However, the second upper arm switch 352u and the second lower arm switch 352d of the second leg 342 to which the output wiring 363, as an unused wiring, is connected do not perform any particular switching operation and are both left in an open (i.e., disconnected) state.

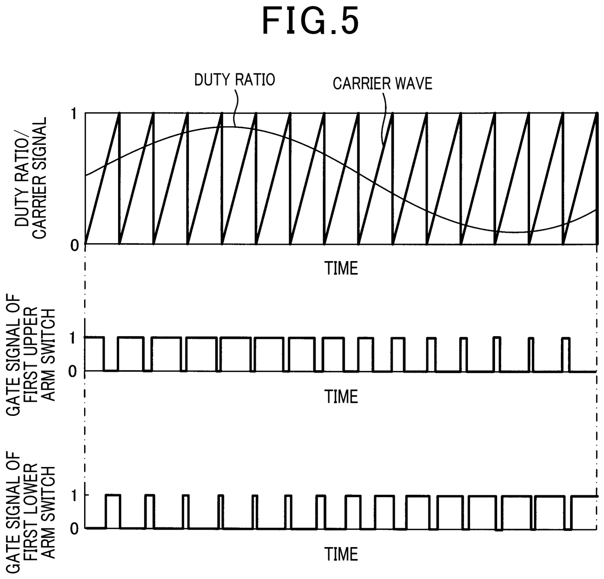

An example of control of the power conversion device 3 by the control device 4 will be described below with reference to Fig. 5.

First, when the DC link capacitor 361 is charged from the three-phase alternating current power source 11 via the first power conversion device 3A, the first upper arm switches 351u and the first lower arm switches 351d of all the first legs 341 of the first power conversion device 3A are turned off. As a result, the DC link capacitor 361 is charged until its voltage becomes equal to that of the three-phase alternating current power source 11. When the DC link capacitor 361 is charged from the three-phase alternating current power source 11, the precharge circuit 152 is utilized to charge the DC link capacitor 361 while suppressing the amount of current in an initial stage of charging so as to prevent an inrush current from flowing.

After the DC link capacitor 361 is charged until its voltage becomes equal to that of the three-phase alternating current power source 11, the on/off of the first upper arm switch 351u and the first lower arm switch 351d in the first power conversion device 3A is controlled so that the voltage of the DC link capacitor 361 is maintained. That is, while the filter capacitor 12 is being charged via the second power conversion device 3B, as will be described below, the first upper arm switch 351u and the first lower arm switch 351d are switching-controlled so that the voltage of the DC link capacitor 361 is maintained.

When the filter capacitor 12 is charged by the second power conversion device 3B from the DC link capacitor 361, the second power conversion device 3B is PWM-controlled (i.e., pulse width modulation-controlled) as follows, for example. Based on the second voltage V2 detected by the second voltage detection device 132, a voltage command value for the output voltage to be output from the second power conversion device 3B is determined. The voltage command value is greater than or equal to the second voltage V2. This voltage command value is compared with the first voltage V1 detected by the first voltage detection device 131. Then, a duty ratio is calculated from a difference between the voltage command value and the first voltage V1. The duty ratio is compared with a carrier signal to control the on/off of the second upper arm switch 352u and the second lower arm switch 352d.

That is, for example, as shown in Fig. 5, each gate signal is input to each of a gate of the second upper arm switch 352u and a gate of the second lower arm switch 352d. In the present embodiment, the second upper arm switches 352u and the second lower arm switches 352d of the two of the second legs 342 in the second power conversion device 3B are controlled, and when these switches are controlled, phases of carriers may be synchronized with each other or may be inverted by 180°.

In other respects, the present embodiment is identical to the first embodiment. In the present embodiment, the example in which the DC link capacitor 361 is charged through a freewheeling diode has been illustrated, but the DC link capacitor 361 can also be charged by any other method. For example, even if there is no freewheeling diode, the DC link capacitor 361 can be charged by controlling the on/off of the first upper arm switch 351u and the first lower arm switch 351d.

In the present embodiment, three-phase alternating current power can be easily converted into desired direct current power to charge the filter capacitor 12. For the power conversion device 3, a power conversion device for a vehicle such as an electric vehicle can also be utilized as the power conversion device for a hydrogen production system. In other words, the power conversion device for a vehicle is connected between a drive battery and a drive motor of the vehicle. The power conversion device for a vehicle can be utilized as the power conversion device for a hydrogen production system, by connecting the electrolysis device 2 to the side of the power conversion device on which the drive battery is connected and connecting the three-phase alternating current power source 11 to the side thereof on which the drive motor is connected.

Other working effects of the present embodiment are identical to those of the first embodiment.

### (Fourth Embodiment)

As shown in Fig. 6, a power conversion system 1 of the present embodiment differs from that of the third embodiment in configuration of a second power conversion device 3B.

In the present embodiment, the second power conversion device 3B has one second leg 342 connected between a high potential-side wiring 33H and a low potential-side wiring 33L, and a reactor 362. The second leg 342 has a second upper arm switch 352u connected to the high potential-side wiring 33H and a second lower arm switch 352d connected to the low potential-side wiring 33L, the second upper arm switch 352u and the second lower arm switch 352d being connected in series.

The reactor 362 is connected between a connection point between a second upper arm switch 352u and a second lower arm switch 352d in the second leg, and a positive-side wiring 5. The low potential-side wiring 33L is connected to a negative-side wiring 50.

Other configurations and working effects of the present embodiment are identical to those of the third embodiment.

### (Fifth Embodiment)

As shown in Fig. 7, the present embodiment is an embodiment of a power conversion system 1 in which a power conversion device 3 further includes a third power conversion device 3C in addition to a first power conversion device 3A and a second power conversion device 3B.

The third power conversion device 3C converts direct current power input through a positive-side input line 371 and a negative-side input line 372 into direct current power of a different voltage. In the present embodiment, the first power conversion device 3A and the second power conversion device 3B include the same configurations as those disclosed in the third embodiment.

The third power conversion device 3C includes a third leg 343 connected to a high potential-side wiring 33H and a low potential-side wiring 33L between the first power conversion device 3A and the second power conversion device 3B, an input-side reactor 373, and an input-side capacitor 374. The third leg 343 has a third upper arm switch 353u connected to the high potential-side wiring 33H and a third lower arm switch 353d connected to the low potential-side wiring 33L, the third upper arm switch 353u and the third lower arm switch 353d being connected in series.

The input-side reactor 373 is connected between a connection point between the third upper arm switch 353u and the third lower arm switch 353d in the third leg 343, and the positive-side input line 371. The input-side capacitor 374 is connected between the positive-side input line 371 and the negative-side input line 372. The low potential-side wiring 33L is connected to a negative-side wiring 50. In the present embodiment, the low potential-side wiring 33L is connected to the negative-side wiring 50 via the negative-side input line 372.

The positive-side input line 371 and the negative-side input line 372 are connected to the direct current power source 161 via a precharge circuit 162. The direct current power source 161 used can be, for example, a rechargeable battery, a fuel cell, a solar cell, or the like. The precharge circuit 162 includes, for example, a switch and a resistor, and prevents an inrush current from flowing from the direct current power source 161 to the power conversion device 3.

The power conversion system 1 of the present embodiment can supply power to the electrolysis device 2 from both the three-phase alternating current power source 11 and the direct current power source 161. When the DC link capacitor 361 is charged from the direct current power source 161, the input-side capacitor 374 is first charged. Thereafter, the DC link capacitor 361 is charged by the third power conversion device 3C. At this time, the control device 4 controls the third power conversion device 3C, for example, by turning off all the switches (i.e., the third upper arm switches 353u and the third lower arm switches 353d) in the third power conversion device 3C. Thus, the DC link capacitor 361 is charged through a freewheeling diode.

Other configurations and working effects of the present embodiment are identical to those of the third embodiment.

The technique of the present disclosure is not limited to the above embodiments, and can be applied to various embodiments without departing from the spirit thereof.

## Claims

1. A power conversion system (1) configured to supply direct current power to an electrolysis device (2) that electrolyzes a raw material to produce hydrogen, the power conversion system comprising:
a power conversion device (3) that converts source power into direct current power;
a positive-side wiring (5) and a negative-side wiring (50) that connect the power conversion device and the electrolysis device to each other;
a filter capacitor (12) connected between the positive-side wiring and the negative-side wiring;
a relay (52) provided on at least one of the positive-side wiring and the negative-side wiring on the electrolysis device side of the filter capacitor;
a first voltage detection device (131) connected between the positive-side wiring and the negative-side wiring on the power conversion device side of the relay;
a second voltage detection device (132) connected between the positive-side wiring and the negative-side wiring on the electrolysis device side of the relay; and
a control device (4) configured to control the power conversion device,
wherein the control device is configured to control the power conversion device so that a first voltage (V1) detected by the first voltage detection device is greater than or equal to a second voltage (V2) detected by the second voltage detection device, when connecting the relay.

2. The power conversion system according to claim 1, wherein
the power conversion device comprises:
a first power conversion device (3A) that converts the source power into direct current power; and
a second power conversion device (3B) that converts the direct current power converted by the first power conversion device into direct current power of a different voltage;
the first power conversion device and the second power conversion device are connected by a high potential-side wiring (33H) and a low potential-side wiring (33L);
a DC link capacitor (361) is connected between the high potential-side wiring and the low potential-side wiring between the first power conversion device and the second power conversion device; and
the control device is configured to charge the DC link capacitor from the source power by the first power conversion device and to charge the filter capacitor from the DC link capacitor by the second power conversion device.

3. The power conversion system according to claim 2, wherein
the first power conversion device comprises a plurality of first legs (341) connected in parallel with each other between the high potential-side wiring and the low potential-side wiring, each first leg comprising a first upper arm switch (351u) connected to the high potential-side wiring and a first lower arm switch (351d) connected to the low potential-side wiring, the first upper arm switch and the first lower arm switch being connected in series,
connection points between the first upper arm switches and the first lower arm switches in the plurality of first legs are connected to an input wiring (301) to which the source power is input,
the second power conversion device comprises a plurality of second legs (342) connected in parallel with each other between the high potential-side wiring and the low potential-side wiring, each second leg comprising a second upper arm switch (352u) connected to the high potential-side wiring and a second lower arm switch (352d) connected to the low potential-side wiring, the second upper arm switch and the second lower arm switch being connected in series;
one or two of the connection points between the second upper arm switches and the second lower arm switches in the plurality of second legs are connected to the positive-side wiring; and
the low potential-side wiring is connected to the negative-side wiring.

4. The power conversion system according to claim 2, wherein
the first power conversion device comprises a plurality of first legs (341) connected in parallel with each other between the high potential-side wiring and the low potential-side wiring, each first leg comprising a first upper arm switch (351u) connected to the high potential-side wiring and a first lower arm switch (351d) connected to the low potential-side wiring, the first upper arm switch and the first lower arm switch being connected in series,
connection points between the first upper arm switches and the first lower arm switches in the plurality of first legs are connected to an input wiring (301) to which the source power is input,
the second power conversion device comprises a second leg (342) and a reactor (362) connected between the high potential-side wiring and the low potential-side wiring, the second leg comprising a second upper arm switch (352u) connected to the high potential-side wiring and a second lower arm switch (352d) connected to the low potential-side wiring, the second upper arm switch and the second lower arm switch being connected in series;
the reactor is connected between a connection point between the second upper arm switch and the second lower arm switch in the second leg and the positive-side wiring; and
the low potential-side wiring is connected to the negative-side wiring.

5. The power conversion system according to claim 2, wherein
the power conversion device further comprising a third power conversion device (3C) that converts direct current power input through a positive-side input line (371) and a negative-side input line (372) into direct current power of a different voltage;
the third power conversion device comprises:
a third leg (343) connected to the high potential-side wiring and the low potential-side wiring between the first power conversion device and the second power conversion device,
an input-side reactor (373), and
an input-side capacitor (374);
the third leg comprises a third upper arm switch (353u) connected to the high potential-side wiring and a third lower arm switch (353d) connected to the low potential-side wiring, the third upper arm switch and the third lower arm switch being connected in series;
the input-side reactor is connected between a connection point between the third upper arm switch and the third lower arm switch in the third leg and the positive-side input line;
the input-side capacitor is connected between the positive-side input line and the negative-side input line; and
the low potential-side wiring is connected to the negative-side wiring.

6. The power conversion system according to claim 1, wherein
the power conversion device (3) converts alternating current power supplied from an alternating current power source (11) into direct current power.

7. The power conversion system according to claim 1, wherein
the power conversion device (3) converts direct current power supplied from a direct current power source (110) into direct current power of a different voltage.

8. A method of supplying direct current power to an electrolysis device that electrolyzes a raw material to produce hydrogen, the method comprising:
detecting a first voltage between a positive-side wiring and a negative-side wiring on a power conversion device side of a relay that is provided on at least one of the positive-side wiring and the negative-side wiring;
detecting a second voltage between the positive-side wiring and the negative-side wiring on the electrolysis device side of the relay;
controlling the power conversion device such that the first voltage detected on the power conversion device side becomes equal to or higher than the second voltage detected on the electrolysis device side; and
connecting the relay after the first voltage becomes equal to or higher than the second voltage.
